# EUROPÄISCHE PATENTSCHRIFT

(11) **EP 0 522 241 B1**
(45) Veröffentlichungstag und Bekanntmachung des Hinweises auf die Patenterteilung: **09.08.1995**
(21) Anmeldenummer: 92105124.9
(22) Anmeldetag: 25.03.1992
(51) Int. Cl.: B64G 1/58

(54) **Anordnung zum Kühlen von Raumflugkörpern**
Cooling arrangement for spacecraft
Système de refroidissement pour engins spatiaux

(30) Priorität: 06.07.1991 DE 4122465
(43) Veröffentlichungstag der Anmeldung: 13.01.1993
(73) Patentinhaber: Daimler-Benz Aerospace Aktiengesellschaft, 80995 München (DE)
(72) Erfinder: Stuempel, Dieter, W-3167 Burgdorf (DE)
(74) Vertreter: Hansmann, Dierk, Dipl.-Ing.

(56) Entgegenhaltungen:
- DE-A- 2 009 398
- US-A- 3 014 353
- US-A- 3 130 940
- US-A- 3 321 154
- US-A- 3 392 781
- JOURNAL OF SPACECRAFT AND ROCKETS Bd. 3, Nr. 9, September 1966, NEW YORK USSeiten 1362 - 1368 SOL Z. FIXLER 'SATELLITE THERMAL CONTROL USING PHASE-CHANGEMATERIALS'

## Beschreibung

Die Erfindung bezieht sich auf eine Anordnung zum Kühlen von Raumflugkörpern gemäß Oberbegriff des Anspruchs 1.

Zur Kühlung von Raumflugkörpern, insbesondere beim Wiedereintritt in die Erdatmosphäre, ist es bekannte Radiatorflächen mit Verdampfungskühlern zu koppeln. Wie aus der DE - 38 29 129 C2 hervorgeht, besteht dort der Verdampfungskühler aus einem von einem Vorratsbehälter über ein Verteilerrohr mit Kühlflüssigkeit versorgten Rohrleitungssystem, das aus in der Außenwand des Raumflugkörpers angeordneten und in Längsrichtung der auftretenden Beschleunigungskräfte verlaufenden Verdampferrohren besteht. Alle Verdampferrohre münden in eine Zweiphasen-Abströmleitung, welche mit einem verdampfte Kühlflüssigkeit über einen Dampfaustritt freisetzenden und nicht verdampfte Kühlflüssigkeit in den Vorratsbehälter rückführenden Tropfenabscheider in Verbindung steht.

Als Kühlflüssigkeit wird dort Wasser eingesetzt, wobei für jeweils 5000 KJ abzuführender Wärmeenergie 2 Liter Wasser erforderlich sind. Durch entsprechende Bemessung des Vorratsbehälters, sowie der Anzahl der Innendurchmesser der Verdampferrohre kann der zur Wärmeabführung erforderliche Massendurchsatz ermittelt werden, und daher ist es möglich die Temperatur des zu kühlenden Radiators soweit abzusenken, daß Aluminium für die Verdampferrohre und den Radiator benutzt werden kann.

Aus der DE-A-2 009 398 ist bereits ein Radiator zum Kühlen von Raumflugkörpern bekannt, der aus einer Außen- und einer Innenschale zusammengesetzt ist. Zwischen der Außenschale und der Innenschale sind Kanäle für ein Kühlmedium vorgesehen und die Außenschale und die Innenschale sind miteinander verschraubt.

Die Erfindung geht von der Anordnung gemäß DE-A-2 009 398 aus und hat die Aufgabe, eine kostengünstige Wärmeabstrahlfläche für Raumflugkörper zum Schutz des Innenraumes gegen aeroydynamisch bedingte Wärmelasten zu schaffen und gleichzeitig eine Anpassung der zu erzielenden Schutzwirkung an sich ändernde unterschiedliche Anforderungen zu ermöglichen.

Diese Aufgabe ist gemäß der Erfindung durch die Kennzeichenmerkmale des Anspruchs 1 gelöst.

Die erfindungsgemäße Maßnahme hat gegenüber mit Verdampfern gekoppelten Radiatoren und geregelten Verdampfungsmechanismen den Vorteil eines einfachen Aufbaus und außerdem erlauben die Kacheln einen modularen Aufbau und damit eine einfache Anpassung an die jeweilige Radiatorgröße und damit eine Anpassung an verschiedene Kapselmissionen.

Die Außen- und Innenschalen der Kacheln können dabei durch Verschraubung zusammengesetzt werden und außerdem können die Außenseiten der Außen- und Innenschalen mit einer Beschichtung (Anstrich, Folie, Spiegel) zur Steigerung der Wärmeabstrahlung versehen sein. Weiterhin kann das Kühlmedium bezüglich Menge, Schmelz- bzw. Verdampfungspunkt den jeweiligen Anforderungen der Wärmebelastung angepaßt bzw. dafür ausgewählt werden. Die Kacheln können darüber hinaus mit von den Kanälen nach außen führenden gasdicht versiegelbaren Entlüftungsbohrungen versehen sein, zum Abbauen eines beim Erhitzen der Kacheln entstehenden inneren Überdruckes.

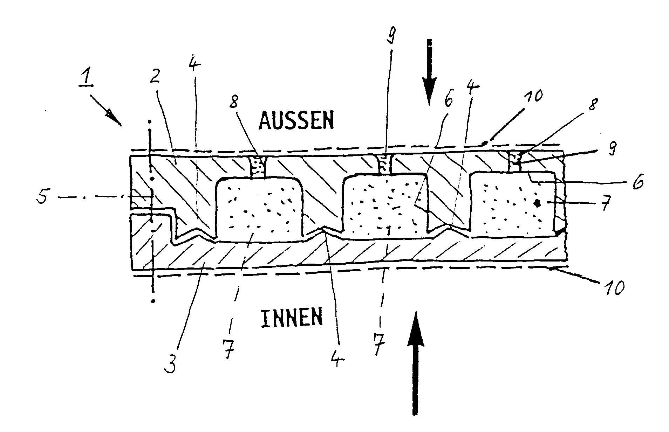

Die Erfindung wird anhand eines in der Zeichnung dargestellten Ausführungsbeispiels einer Kachel näher erläutert.

Die Darstellung zeigt einen Ausschnitt einer Kachel 1 im Schnitt, die aus einer Außenschale 2 und einer Innenschale 3 besteht. Beide Schalen 2,3 sind über ineinander greifende Verzahnungen 4 wärmeleitend miteinander gekoppelt und durch eine angedeutete Schraubverbindung 5 miteinander verbunden. In der Außenschale 2 sind jeweils zwischen den Verzahnungen Kanäle 6 in der Innenseite vorgesehen, die mit einem Kühlmedium 7 gefüllt sind. Von jedem Kanal 6 führt mindestens je eine Entlüftungsbohrung 8 nach außen, die mit einem Harz 9 versiegelt ist. Die äußeren Oberflächen der Schalen 2,3 sind mit einer Beschichtung 10, z.B. Anstrich, Folie oder Spiegel, zur Steigerung der Wärmeabstrahlung versehen. Für das Kühlmedium 7, das nicht zum Wärmetransport eingesetzt wird, können geeignete Phasenwechsel-Stoffe beliebiger Konsistenz (flüssig, fest, pastös) benutzt werden, wobei die Menge der Schmelz- bzw. Verdampfungspunkt für die jeweiligen Anforderungen der Wärmebelastung ausgewählt werden kann. Die lösbare Schraubverbindung 5 wird dabei so dimensioniert, daß bei einer Kacheltemperatur im Arbeitsbereich als Radiator, z.B. zwischen -30 Grad und +10 Grad eine maximale Vorspannung für die miteinander verschraubten Schalen 2,3 sich ergibt. Mit steigender Temperatur z.B. durch aerodynamsiche Aufheizung beim Eintritt in die Atmosphäre wird bei einem Einsatz der Radiatorkacheln als Hitzeschutz die Vorspannung in den Schraubverbindungen 5 der Kachelschalen 2,3 abnehmen, wodurch sich auch der Wärmetransport zwischen den Kachelschalen 2,3 verringert. Die Kacheln 1 wirken, wie zuvor erwähnt, als Hitzeschutz. Die Verzahnung der Schalen 2,3 ist so zu dimensionieren, daß eine hinreichende thermische Kopplung der Schalen 2,3 bei der erforderlichen Festigkeit (1 bar innerer Überdruck gegenüber dem äußeren Vakuum) gewährleistet wird.

Die Kanäle 6 sind, wie zuvor erwähnt, mit dem Kühlmedium 7 gefüllt, und die Entlüftungsbohrungen 8 werden nach dem Zusammenbau der Kachelschalen 2,3 gasdicht, z.B. mit Harz 9 versiegelt. Beim Erhitzen einer Kachel 1 wird daher ein aufgrund des Phasenwechsels entstehender innerer Überdruck über die Entlüftungsbohrungen 8 abgebaut. Das Phasenwechselmedium kann daher z.B bei einem Wiedereintritt des Raumfahrzeuges in die Atmosphäre aufgrund des steigenden Druckes und aufgrund der auftretenden negativen Beschleunigung in flüssiger oder dampfförmiger Form durch die Entlüftungsbohrungen 8 der Außenschale 2 entweichen und dabei erhebliche Wärmemengen aus der heißen Grenzschicht mitnehmen. Nach einem erfolgreichen Einsatz können die Kacheln 1 aufgrund des erzielten Schutzes gegen Überhitzung und aufgrund der Wiederauffüllbarkeit mit dem Phasenwechselmedium nach Demontage und erneuter Montage wiederverwendet werden.

Die erfindungsgemäßen Kacheln 1 sichern bei Wiedereintrittskapseln der Raumfahrttechnik eine gezielte Wärmeabführ während des Betriebes im Orbit und sie verhindern darüber hinaus das Eindringen unzulässiger Wärmemengen durch das Radiatorfenster in den Innenraum einer Raumkapsel während der Wiedereintrittsphase.

### Bezugszahlen:

- 1: Kachel
- 2: Außenschale
- 3: Innenschale
- 4: Verzahnung
- 5: Schraubverbindung
- 6: Kanal
- 7: Kühlmedium
- 8: Entlüftungsbohrung
- 9: Harz
- 10: Beschichtung

## Patentansprüche

1. Anordnung zum Kühlen von Raumflugkörpern mit einem Radiator und einem darin angeordneten Kühlmedium, das bei der Wärmeaufnahme einen Phasenwechsel durchführt, bei der der Radiator aus einer metallischen oder keramischen Kachel (1) besteht, die jeweils aus einer Außen- und/oder Innenschale (2,3) zusammengesetzt ist und bei der die Außen- und/oder Innenschale (2,3) Kanäle zur Aufnahme des Kühlmediums aufweist, sowie bei der die Außen- und Innenschalen (2,3) durch eine Verschraubung (59) zu einer Kachel (1) zusammensetzbar sind, wobei in der Außenschale (2) Entlüftungsbohrungen (8) vorgesehen sind, die mit einer Versiegelung (9) gefüllt sind, dadurch gekennzeichnet, daß die Außenschale (2) und die Innenschale (3) im Bereich ihrer einander zugewandten Begrenzungen ineinander eingreifende Profilierungen (4) aufweisen, daß die Verschraubung der Außenschale (2) und der Innenschale (3) mit einer Vorspannung derart dimensioniert ist, daß ab einer vorgebbaren Temperatur der Wärmeübergang zwischen der Innenschale (3) und der Außenschale (2) verringert wird und daß die Versiegelung (9) bei Vorliegen vorgebbarer Temperatur- und Druckbedingungen vom Kühlmedium (7) aus den Entlüftungsbohrung (8) herausdrückbar ist.

2. Anordnung nach Anspruch 1, dadurch gekennzeichnet, daß die Außenseiten der Außen- und Innenschalen (2,3) mit einer Beschichtung (10) zur Steigerung der Wärmeabstrahlung versehen ist.

3. Anordnung nach einem der Ansprüche 1 oder 2, dadurch gekennzeichnet, daß das Kühlmedium (7) bezüglich Menge und Schmelz- beziehungsweise Verdampfungspunkt den jeweiligen Anforderungen der Wärmebelastung angepaßt beziehungsweise dafür ausgewählt ist.

4. Anordnung nach einem der vorhergehenden Ansprüche, dadurch gekennzeichnet, daß der Radiator aus einer Vielzahl der Kacheln (1) modulartig zusammensetzbar ist.

## Claims

1. Arrangement for cooling space missiles, having a radiator containing a cooling medium which in the course of heat absorption effects a phase change, wherein the radiator comprises a metal or ceramic tile (1) composed in each case of an outer and/or inner shell (2, 3) and wherein the outer and/or inner shell (2, 3) has channels for receiving the cooling medium, and wherein the outer and inner shells (2, 3) may be combined by means of a screw connection (59) into a tile (1), vent bores (8) which are filled with a sealing means (9) being provided in the outer shell (2), characterized in that the outer shell (2) and the inner shell (3) in the region of their opposing boundaries have profiles (4) which engage one into the other, that the screw connection of the outer shell (2) and the inner shell (3) is dimensioned with an initial stress in such a way that from a preselectable temperature the heat transfer between the inner shell (3) and the outer shell (2) is reduced and that given preselectable temperature and pressure conditions the sealing means (9) may be expelled from the vent bores (8) by the cooling medium (7).

2. Arrangement according to claim 1, characterized in that the outsides of the outer and inner shells (2, 3) are provided with a coating (10) to improve heat radiation.

3. Arrangement according to one of claims 1 or 2, characterized in that the cooling medium (7), in terms of its quantity and its melting or evaporation point, is adapted to or selected for the prevailing heat load requirements.

4. Arrangement according to one of the preceding claims, characterized in that the radiator may be assembled in a modular manner from a plurality of the tiles (1).

## Revendications

1. Dispositif pour refroidir des engins spatiaux comprenant un radiateur dans lequel se trouve du fluide de refroidissement réalisant un changement de phase par réception de chaleur, le radiateur étant formé par un carreau (1) métallique ou céramique qui se compose respectivement d'une partie extérieure et/ou d'une partie intérieur (2, 3) et la partie extérieure et/ou la partie intérieure (2, 3) comportent des canaux pour recevoir le fluide de refroidissement, et la partie extérieure et la partie intérieure (2, 3) sont réunies par une liaison vissée (5) pour former un carreau (1), la partie extérieure (2) comportant des perçages de ventilation (évents) (8) remplis d'un bouchon de colmatage (9), caractérisé en ce que la partie extérieure (2) et la partie intérieure (3) comportent, au niveau de leur surface adjacente, des profils (4) interpénétrants, et la liaison vissée de la partie extérieure (2) et de la partie intérieure (3) est réalisée avec une précontrainte telle qu'à partir d'une température prédéterminée la conductivité thermique entre la partie intérieure (3) et la partie extérieure (2) diminue et en ce que le bouchon de colmatage (9) peut être poussé du perçage de ventilation (8) par le fluide de refroidissement (7) pour des conditions de température et de pression prédéterminées.

2. Dispositif selon la revendication 1, caractérisé en ce que le côté extérieur de la partie extérieure et de la partie intérieure (3) est muni d'un revêtement (10) pour augmenter le rayonnement thermique.

3. Dispositif selon l'une des revendications 1 ou 2, caractérisé en ce que le fluide de refroidissement (7) est adapté ou choisi en fonction de la quantité et du point de fusion ou du point de vaporisation pour les exigences respectives de la charge thermique.

4. Dispositif selon l'une des revendications précédentes, caractérisé en ce que le radiateur est composé de manière modulaire d'un grand nombre de carreaux (1).
